## Europäisches Patentamt

## European Patent Office

## Office européen des brevets

(11) Veröffentlichungsnummer: **0 200 162**
**B1**

(12) ## EUROPÄISCHE PATENTSCHRIFT

(45) Veröffentlichungstag der Patentschrift:
05.07.89

(51) Int. Cl.⁴: **B 23 K 11/30**, B 23 K 11/36,
**B 23 K 37/00**

(21) Anmeldenummer: **86105665.3**

(22) Anmeldetag: **24.04.86**

(54) Verfahren zum selbsttätigen Auswechseln von Elektrodenkappen an Schweisselektrodenschäften sowie Vorrichtung zur Durchführung des Verfahrens.

(30) Priorität: **30.04.85 DE 3515597**

(43) Veröffentlichungstag der Anmeldung:
**05.11.86 Patentblatt 86/45**

(45) Bekanntmachung des Hinweises auf die Patenterteilung:
**05.07.89 Patentblatt 89/27**

(84) Benannte Vertragsstaaten:
**FR GB IT SE**

(56) Entgegenhaltungen:
**DE-A- 3 323 038**

(73) Patentinhaber: **BAYERISCHE MOTOREN WERKE Aktiengesellschaft, Postfach 40 02 40 Petuelring 130 - AJ-30, D-8000 München 40 (DE)**

(72) Erfinder: **Streckert, Manfred, Weidenstrasse 1, D-8311 Kronwieden-Loiching 1 (DE)**

(74) Vertreter: **Bücken, Helmut et al, Bayerische Motoren Werke Aktiengesellschaft Postfach 40 02 40 Petuelring 130 - AJ-30, D-8000 München 40 (DE)**

**Beschreibung**

Die Erfindung bezieht sich auf ein Verfahren der im Oberbegriff des ersten Anspruchs angegebenen Art sowie auf eine Vorrichtung zur Durchführung des Verfahrens.

Aus der DE-A1-3 323 038 ist das gattunggemäße Verfahren bekannt. Bei diesem Verfahren wird der Elektrodenschaft über eine separate Spanneinrichtung mit Stellmotor geklemmt und dann die Elektrodenkappe über eine Klemmeinrichtung mit ebenfalls separatem Stellmotor festgeklemmt und in Drehrichtung versetzt, wobei über eine Kulissenführung gleichzeitig die Abziehbewegung der Elektrodenkappe durchgeführt wird. In unmittelbarer Nachbarschaft zu dieser Wechselstation ist ein Elektrodenkappenmagazin mit zugeordnetem Amboß vorgesehen. Nach erfolgtem Elektrodenkappenabzug wird der Elektrodenschaft zu diesem Magazin verfahren, nimmt dort eine Elektrodenkappe auf und schlägt sie auf dem Amboß fest.

Diese Vorrichtung hat sich prinzipiell hervorragend bewährt. Nachteilig hierbei ist jedoch nur die Verwendung bei Portalrobotern, der erhöhte Platzbedarf sowie die fehlende Kontrolle, ob die Elektrodenkappe ordnungsgemäß abgezogen wurde und ob tatsächlich eine neue Kappe aufgenommen wurde.

Aufgabe der vorliegenden Erfindung ist, das gattungsgemäße Verfahren zu vereinfachen. Diese Aufgabe wird erfindungsgemäß durch die Merkmale des ersten Anspruchs gelöst. Die Lösung basiert auf der Erkenntnis, daß es zum Abziehen der Elektrodenkappen nicht notwendig ist, den Elektrodenschaft von einer besonderen Halteeinrichtung festzuklemmen. Üblicherweise ist der Elektrodenschaft an einem Schweißroboter befestigt. Dieser kann die notwendige Gegenkraft beim Drehen und auch die Haltekraft bei der Abzugsbewegung aufbringen.

Die Weiterbildung des Verfahrens nach Anspruch 2 hat den Vorteil, daß bei selbsttätig von einem Schweißroboter durchgeführten Elektrodenkappenwechsel sichergestellt ist, daß nicht versucht werden soll, eine neue Elektrodenkappe aufzunehmen, wenn die alte nicht abgezogen wurde.

Da es theoretisch auch vorkommen kann, daß die neu aufgenommene Elektrodenkappe nicht an dem Elektrodenschaft haften bleibt und um in diesem Fall sicherzustellen, daß nicht ohne aufgesetzte Elektrodenkappe versucht wird zu schweißen, wird die Weiterbildung nach Anspruch 3 vorgeschlagen.

Die Merkmale des Anspruchs 4 beschreiben eine zum Durchführen des erfindungsgemäßen Verfahrens besonders geeignete Vorrichtung. Durch diese Anordnung ist es möglich, mit einem einzigen Stellmotor den gesamten Elektrodenwechsel durchzuführen, da die Halte- und Abzugskräfte von dem Schweißroboter selbst bzw. von der Bedienungsperson aufgebracht werden können. Dadurch vereinfacht sich der konstruktive Aufwand gegenüber der bisher bekannten Anordnung erheblich, womit auch ihre Störanfälligkeit sinkt. Durch die Verwendung nur eines einzigen Stellmotors ist es zudem möglich, daß die Vorrichtung direkt neben den Schweißrobotern aufgestellt werden kann, da der Platzbedarf hierfür äußerst gering ist. Die bisher bekannte Vorrichtung war hierzu weniger geeignet, da aufgrund des benötigten Platzbedarfes und des tatsächlich vorhandenen diese nur vereinzelt angewendet werden konnte.

Sollten die Elektrodenkappen an einer Schweißzange gewechselt werden, so ist es schaltungstechnisch einfacher, wenn die Abzugsbewegung der Kappen von der Klemmeinrichtung ausgeführt wird als sie von dem Roboter ausführen zu lassen. Hierfür beschreibt die Weiterbildung nach Anspruch 5 eine geeignete Ausbildung.

Durch die Weiterbildung nach Anspruch 6 wird eine sehr kompakte Bauweise des Aufnahmeteils erreicht. Ein weiterer Vorteil ist darin zu sehen, daß der Arm die Elektrodenkappe gegen die gegenüberliegende Innenwand des Aufnahmeteils drücken kann, so daß ein Verkanten der Elektrodenkappe und damit eine Behinderung beim Drehen und Abziehen nicht auftreten kann.

Um ein Durchrutschen des Aufnahmeteils auf der Elektrodenkappe zu vermeiden, ist die Ausbildung nach Anspruch 7 oder 8 oder gemeinsame Verwendung der beiden in Anspruch 7 und 8 beschriebenen Merkmale sinnvoll.

Die Ansprüche 9 und 10 beschreiben eine geeignete Kontrolleinrichtung. Die Kontrolleinrichtung ist nach den Merkmalen des Anspruchs 9 sinnvollerweise in räumlicher Nachbarschaft zum Aufnahmeteil angeordnet, damit sofort nach Abziehen der Elektrodenkappe der Kontrollvorgang durchgeführt werden kann. Als Kontrolleinrichtung hat sich ein Endlagenschalter bewährt. Dieser wird von dem Elektrodenschaft derart angefahren, daß bei abgezogener Elektrodenkappe keine Betätigung des Schalters erfolgt, wohingegen bei nicht abgezogener Elektrode ein Fehlersignal erfolgt. Auch kann diese Kontrolleinrichtung dazu verwendet werden festzustellen, ob eine neue Elektrodenkappe sicher aufgenommen wurde.

Hierzu ist es nur erforderlich, den Verfahrweg während des Kontrollvorganges umzudrehen, so daß der Endlagenschalter in der entgegengesetzten Richtung betätigt werden muß um festzustellen, daß eine Elektrodenkappe sicher aufgenommen wurde.

Durch die Weiterbildung nach Anspruch 11 wird der Vorteil erreicht, daß der Elektrodenschaft geradlinig zum Magazin weiterbewegt werden kann, um dort eine neue Elektrodenkappe aufzunehmen. Dies stellt bei Verwendung von Schweißrobotern einen programmiertechnisch einfachen Vorgang dar.

Um bei Verwendung von Schweißzangen eine sichere Elektrodenkappenaufnahme zu gewährleisten, ist die Weiterbildung nach Anspruch 11 vorteilhaft.

Eine geeignete Vereinzelungseinrichtung beschreibt Anspruch 12. Hiermit wird der Vorteil erreicht, daß während der Kappenaufnahme diese sicher gehalten werden kann, so daß eine eindeutige Lage der Elektrodenkappe vorhanden ist.

Eine besonders einfache Ausführung des Magazins mit Verriegelungseinrichtung beschreibt der Anspruch 13. Dadurch entfallen zusätzliche Steuereinrichtungen, um die Elektrodenkappen aus dem Magazin in die Vereinzelungseinrichtung zu überführen.

Im folgenden wird die Erfindung anhand eines ausgewählten Beispiels näher dargestellt.

Es stellen dar:

Fig. 1 eine erfindungsgemäß aufgebaute Elektrodenkappenwechselstation für Schweißzangen;

Fig. 2 eine erfindungsgemäß aufgebaute Wechselstation für Picker.

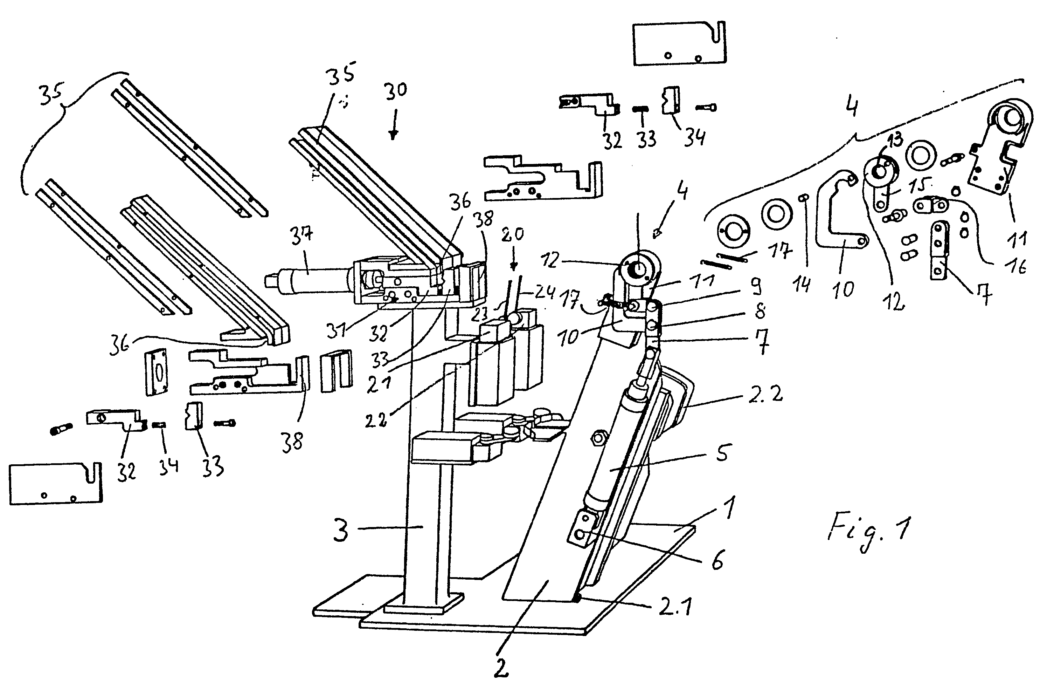

Die erfindungsgemäß aufgebaute Wechselstation nach Fig. 1 besteht aus einer Grundplatte 1, auf der zwei Säulen 2 und 3 befestigt sind.

Während die Säule 3 starr an der Grundplatte 1 befestigt ist, ist die Säule 2 verschwenkbar befestigt. Hierzu ist sie über ein Scharnier 2.1 mit der Grundplatte 1 verbunden, wofür das Scharnier derart angebracht ist, daß sie seitlich kippbar ist. Bewegt wird die Säule 2 über einen auf der Grundplatte 1 befestigten Stellmotor 2.2.

An der Säule 2 ist die Klemmeinrichtung 4 mit ihrem Stellmotor 5 vorgesehen. Der Stellmotor ist in diesem Beispiel eine hydraulisch oder pneumatisch betätigte Zylinderkolbeneinheit. Diese ist mit ihrem Zylinder drehbar über ein Gabelstück 6 an der Säule 2 befestigt.

Die Kolbenstange ist an ihrem freien Ende gelenkig verbunden mit einer Verbindungsstange 7. Diese Verbindungsstange 7 weist zwei Anlenkpunkte 8 und 9 auf, welche übereinander angeordnet sind. An dem Anlenkpunkt 8 ist ein Arm 10 drehbar befestigt, welcher eine sichelförmige Kontur aufweist und in der Klemmeinrichtung 4 drehbar gelagert ist. Die Klemmeinrichtung 4 selbst besteht aus dem Gehäuse 11, in welchem das Aufnahmeteil 12 drehbar befestigt ist. Das Aufnahmeteil 12 besteht aus einem Kreiszylinder mit Mittenbohrung 13. Die Mittenbohrung 13 dient zur Aufnahme der nicht dargestellten Elektrodenkappe. Sie ist auf ihrem Innenumfang gezahnt, um die Elektrode verdrehsicher aufnehmen zu können.

Zur Befestigung des Armes 10 an dem Aufnahmeteil 12 ist dieses auf einem Teil seines Außenumfangs bis zur Aufnahmebohrung 13 geschlitzt. In diesen Schlitz greift der Arm 10 ein. Gehalten wird er durch einen Stift 14, welcher in dem Aufnahmeteil 12 gelagert ist. Der Arm 10 weist an seinem vorderen mit der Aufnahmebohrung 13 zusammenwirkenden Ende einen kreissegmentförmigen Abschnitt mit gezahnter Umfangsfläche auf, um so in Ruheposition die Aufnahmebohrung 13 vollständig freizugeben.

Das Aufnahmeteil 12 weist an seinem unteren, d.h. dem Stellmotor 5 zugewandten Bereich einen Ansatz 15 auf. An dem Ansatz 15 greift ein Hebel 16 an, der mit dem oberen Anlenkpunkt 9 der Verbindungsstange 7 verbunden ist.

In Ruhestellung wird der Hebel 16 von einem Federpaar 17 zurückgezogen. Dadurch ist sichergestellt, daß in dieser Stellung die Aufnahmebohrung 13 frei zugänglich ist, da über die Verbindungsstange 7 der Arm 10 aus dem Bereich der Aufnahmebohrung 13 herausgeschwenkt ist.

Neben dieser Klemmeinrichtung 4 ist die Kontrolleinrichtung 20 an der Säule 3 befestigt. Sie besteht aus zwei im Abstand der Elektrodenschäfte der Schweißzange angeordneten Endlagenschalter 21 und 22, die mit Betätigungsstiften 23 und 24 ausgerüstet sind.

An der Säule 3 ist ebenfalls ein Magazin 30 für neue Elektrodenkappen vorgesehen. Das Magazin 30 weist an seinem Ausgang eine Vereinzelungseinrichtung 31 auf. Diese besteht aus zwei Backen 32 und 33, die über einen Kraftspeicher 34 auf Abstand gehalten werden. Der Abstand der Backen 32 und 33 ist derart gewählt, daß eine Elektrodenkappe sicher und leicht hineinfallen kann. Die Elektrodenkappen selbst sind in Schienen 35 gestapelt. Die Schienen 35 sind unter einem Winkel zur Horizontalen geneigt, derart, daß die dort befindlichen Elektrodenkappen unter Einwirkung der Schwerkraft zum Magazinausgang 36 nachrutschen können. Der Magazinausgang 36 fluchtet in Ruhestellung der Backen 32 und 33 mit deren Öffnung. Alle bisher beschriebenen Elemente 31 - 36 des Magazins 30 sind zweifach vorhanden. Das Magazin 30 ist also als Doppelmagazin aufgebaut, um für beide Schweißzangenschäfte die Elektrodenkappenaufnahme so einfach wie möglich zu gestalten.

Die Backenpaare 32 und 33 werden von einem einzigen Stellmotor 37 senkrecht zu den Magazinöffnungen 36 bis zu einem Anschlag 38 verschoben.

Die erfindungsgemäße Vorrichtung arbeitet wie folgt:

Sollen von einer Schweißzange die beiden Elektrodenkappen gewechselt werden, so erhält der die Schweißzange tragende Roboter einen geeigneten Steuerbefehl. Aufgrund dieses Steuerbefehls fährt der Schweißroboter mit der Schweißzange zur Klemmeinrichtung 4. Die Schweißzange mit der abzuziehenden Elektrodenkappe wird derart vor der Aufnahmebohrung 33 positioniert, daß durch eine Schwenkbewegung der Säule 2 durch den Stellmotor 2.2 die Aufnahmebohrung 13 die abzuziehenden Elektrodenkappe umschließt. Dadurch wird die Elektrodenkappe in die Aufnahmebohrung 13 eingetaucht. Sodann wird der Stellmotor 5 eingeschaltet. Die herausfahrende Kolbenstange dreht die Verbindungsstange 7 um den Anlenkpunkt 9. Dies ist deshalb möglich, da dieser über die Feder 17 gehalten wird. Durch diese Drehbewegung wird der Arm 10 um seine Achse 14 gedreht und klemmt dadurch die Elektrodenkappe in der Aufnahmebohrung 13 fest.

Die weitere Ausfahrbewegung der Kolbenstange des Stellmotors 5 erreicht, daß die Drehkraft auf die Verbindungsstange 7 die Rückhaltekraft der Federn 17 überwindet, so daß sich nun auch zusätzlich zum Arm 10 das Aufnahmeteil 12 im Gehäuse 11 dreht. Dadurch wird die festgeklemmte Elektrodenkappe auf dem Elektrodenschaft gedreht. Gleichzeitig bei dieser Drehbewegung verschwenkt der Stellmotor 2.2 die Säule 2 in Richtung von dem Elektrodenschaft weg. Durch die überlagerte Dreh- und Zugbewegung wird die Elektrodenkappe vom Elektrodenschaft abgezogen.

Sobald die Elektrodenkappe vollständig von dem Elektrodenschaft gelöst ist, verfährt der Roboter die Schweißzange derart, daß nunmehr der andere Elektrodenschaft an der Rückseite der Aufnahmebohrung 13 steht. Nunmehr wird die Säule 2 nach hinten gekippt, so daß sie die Elektrodenkappe umhüllt. Hierbei wird die noch in der Aufnahmebohrung 13 vorhandene bereits abgezogene Elektrodenkappe ausgestossen. Bei der anderen Elektrodenkappe erfolgt dann der gleiche Abziehvorgang.

Sobald beide Kappen abgezogen sind, fährt der Schweißroboter zur Kontrolleinrichtung 20. Die Betätigungsstifte 23 und 24 haben einen derart lichten Abstand voneinander, der dem Abstand der beiden Schweißzangenschäfte ohne Elektrodenkappe entspricht. Sind also beide Elektrodenkappen abgezogen, so kann die Schweißzange berührungsfrei an den beiden Betätigungsstiften 23 und 24 vorbeibewegt werden. Ist hingegen eine oder sind beide Kappen nicht abgezogen, so wird ein oder werden beide Betätigungsstifte bewegt. Diese Bewegung wird von den entsprechenden Endschaltern 21 oder 22 erfaßt und führt zu einer Rückwärtsbewegung des Schweißroboters hin zur Klemmeinrichtung 4, um die entsprechende Elektrodenkappe erneut abziehen zu lassen.

Sind beide Elektrodenkappen abgezogen, so wird die Kontrolleinrichtung 20 ohne Betätigung der beiden Endlagenschalter 21 und 22 passiert. Sodann fährt der Schweißroboter weiter zum Magazin 30. Aufgrund der Ruhestellung der beiden Backenpaare 32 und 33 sind zwischen ihnen aus den Führungsschienen 35 je eine Elektrodenkappe nachgerutscht. Sodann wird der Stellmotor 37 betätigt. Dadurch werden die Backen 32 und über die Federn 34 die Backen 33 verschoben bis zu dem Anschlag 38. Durch diese Verschiebebewegung werden zum einen die Magazinausgänge 36 verschlossen, so daß keine Elektrodenkappen nachrutschen können. Zum anderen werden durch das Auftreffen der Backen 33 auf den Anschlag 38 die eingelagerten Elektrodenkappen geklemmt. In dieser Position taucht nun zuerst der vordere Elektrodenschaft und dann der hintere in die jeweilige Elektrodenkappe ein. Sodann wird der Stellmotor 37 entlastet so daß die Backe 31 aufgrund der Federn 34 zurückweichen kann und die Elektrodenkappe freigibt.

Nach der Aufnahme der beiden Elektrodenkappen fährt der Schweißroboter wieder zurück zur Kontrolleinrichtung 20 und passiert diese in der umgekehrten Richtung. Aufgrund der aufgenommenen Elektrodenkappen werden nun die beiden Betätigungsstifte 23 und 24 beim Passieren im Uhrzeigersinn ausgelenkt und betätigen die zugehörigen Endschalter 21 und 22. Dieses Signal bedeutet, daß beide Elektrodenkappen aufgenommen sind. Fehlt ein Signal, so weiß die Steuereinrichtung des Schweißroboters, daß auf der betreffenden Seite, wo das Fehlersignal entstanden ist, keine Elektrodenkappe aufgenommen wurde. In diesem Fall wird dann der Schweißroboter wieder zurück zum Magazin gefahren, so daß der entsprechende Elektrodenschaft eine neue Elektrodenkappe aufnehmen kann.

Sobald die Kontrolleinrichtung 20 das Vorhandensein von zwei Elektrodenkappen gemeldet hat, fährt der Schweißroboter aus dem Bereich der Kontrolleinrichtung 20 hinaus. Sodann werden die beiden Schweißzangenschäfte gegeneinander gedrückt. Dadurch wird erreicht, daß die beiden aufgeschobenen Elektrodenkappen sicher auf den Elektrodenschäften geklemmt werden. Anschließend ist der Roboter wieder einsatzbereit.

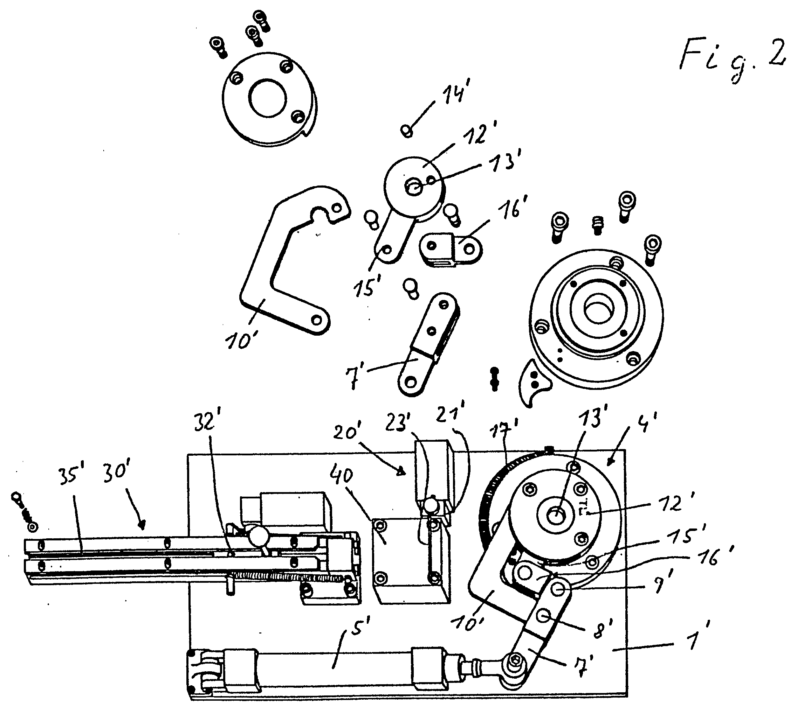

In Fig. 2 ist die erfindungsgemäße Elektrodenkappenwechseleinrichtung für Schweißroboter mit einem Picker dargestellt. Da der Picker aus einem Elektrodenschaft mit angesetzter Elektrodenkappe besteht und üblicherweise senkrecht von oben in Schweißposition gebracht wird, ist die in Fig. 2 dargestellten Wechseleinrichtung auf einem nicht näher dargestellten Tisch befestigt. Sie unterscheidet sich ab von der in Fig. 1 dargestellten Einrichtung nur dadurch, daß die Klemmeinrichtung 4' nur einseitig zugänglich ist und nicht verschwenkbar angeordnet ist und daß das Magazin nur einseitig ausgebildet ist und dementsprechend auch die Kontrolleinrichtung nur aus einem Endlagenschalter besteht. Der Aufbau der Klemmeinrichtung und deren Funktion ist identisch mit der in Fig. 1 beschriebenen Anordnung.

Das Elektrodenkappemagazin 30' weicht insofern von dem in Fig. 1 dargestellten ab, als hier keine Vereinzelungseinrichtung vorgesehen ist. Die einzelnen Elektrodenkappen in der horizontal angeordneten Führung 35' sind federbelastet und werden über einen Schieber 32' zum Magazinausgang 36' geführt.

Zum Wechseln der Elektrodenkappe wird die Elektrode von dem Roboter zur Klemmeinrichtung 4' verfahren und senkt dort die Elektrodenkappe in die geöffnete Aufnahmebohrung 13'. Sodann läuft der eingangs beschriebene Klemmvorgang ab. Die unter Drehen der Elektrodenkappe gleichzeitig notwendige Abzugsbewegung wird durch den Roboter selbst ausgeführt, indem er die Elektrode aus der Aufnahmebohrung 13' herauszieht.

Nachdem der Elektrodenschaft von der alten Elektrodenkappe befreit wurde, die Kontrolleinrichtung 20' passiert hat und eine neue Elektrodenkappe aus dem Magazin 30' aufgenommen hat, fährt er wiederum zur Kontrolleinrichtung 20' und betätigt dort den Schaltstift 23'. Sodann fährt er zu dem zwischen dem Elektrodenkappenmagazin 30' und der Kontrolleinrichtung 20' angeordneten Amboß 40. Hier wird durch mehrmaliges Aufschlagen die Elektrodenkappe fest auf den Elektrodenschaft gepreßt.

**Patentansprüche**

1. Verfahren zum selbsttätigen Auswechseln von Elektrodenkappen an Schweißelektrodenschäften, die an Picker oder Schweißzangen von Schweißrobotern befestigt sind, wobei die Elektrodenkappe zum Wechseln festgeklemmt und gedreht und nach dem Abzug der Elektrodenkappe der Schweißelektrodenschaft zu einem Elektrodenkappenmagazin verlagert wird, dort in eine Elektrodenkappe eintaucht und diese dann festschlägt, dadurch gekennzeichnet, daß der Schweißelektrodenschaft zum Abziehen der Elektrodenkappe während ihres Drehens vom Schweißroboter verdrehsicher gehalten, und daß der Schweißelektrodenschaft oder die Elektrodenkappe gleichzeitig zurückgezogen wird.

2. Verfahren zum selbsttätigen Auswechseln nach Anspruch 1, dadurch gekennzeichnet, daß der Schweißelektrodenschaft nach dem Kappenabzug auf ordnungsgemäßen Abzug kontrolliert wird.

3. Verfahren nach Anspruch 1 oder 2, dadurch gekennzeichnet, daß der Schweißelektrodenschaft nach der Kappenaufnahme erneut kontrolliert wird.

4. Vorrichtung zur Durchführung des Verfahrens, wobei in einer Wechselstation eine lösbar befestigte Elektrodenkappe von einem Schweißelektrodenschaft abgezogen wird, bestehend im wesentlichen aus einer drehbar gelagerten, über einen Stellmotor (5) betätigbaren Klemmeinrichtung (4) zum Klemmen und Drehen der Elektrodenkappe um ihre Längsachse, wozu die Klemmeinrichtung (4) aus einem um seine Längsachse drehbar gelagerten, mit dem Stellmotor (5) verbundenen Aufnahmeteil (12) mit mittiger Aufnahmebohrung (13) und aus einem ebenfalls drehbar gelagerten Spannteil (10) besteht, dadurch gekennzeichnet, daß an dem Aufnahmeteil (12) außermittig ein Hebel (16) drehbar befestigt, der mit seinem freien Ende drehbar an einer verschwenkbar mit dem Stellmotor (5) verbundenen Verbindungsstange (7) gelagert ist, daß der Anlenkpunkt zwischen dem Aufnahmeteil (12) und dem Hebel (16) federbelastet (Federpaar 17) ist, daß das Spannteil aus einem sichelförmigen Arm (10), der einerseits derart außermittig an dem Aufnahmeteil (12) gelagert ist, daß er bei Verschwenken einen Teil der Aufnahmebohrung (13) verschließt, und andererseits mit Abstand vom Anlenkpunkt (9) des Hebels (16) an der Verbindungsstange gelagert ist.

5. Vorrichtung nach Anspruch 4, dadurch gekennzeichnet, daß der Stellmotor (5) mit der Klemmeinrichtung (4) an einer in Axialrichtung der Aufnahmebohrung (13) verschwenkbaren Säule (2) befestigt ist, wobei die Säule von einem weiteren Stellmotor (2.2) verschwenkt werden kann.

6. Vorrichtung nach Anspruch 4 oder 5, dadurch gekennzeichnet, daß das Aufnahmeteil (12) auf einem Teil seines Umfanges radial geschlitzt ist und daß in diesem Schlitz der Arm (10) angeordnet ist.

7. Vorrichtung nach einem der Ansprüche 4 bis 6, dadurch gekennzeichnet, daß die Bohrungsinnenwand (13) im Aufnahmeteil (12) gezahnt ist.

8. Vorrichtung nach einem der Ansprüche 4 bis 7, dadurch gekennzeichnet, daß der Arm (10) auf Höhe seines mit der Bohrung (13) zusammenwirkenden Abschnittes gezahnt ist.

9. Vorrichtung nach Anspruch 4, dadurch gekennzeichnet, daß in räumlicher Zuordnung zu dem Aufnahmeteil (12) eine Kontrolleinrichtung (20) vorgesehen ist.

10. Vorrichtung nach Anspruch 9, dadurch gekennzeichnet, daß die Kontrolleinrichtung (20) aus mindestens einem Endlagenschalter (21 bzw. 22) besteht, der in den Verfahrweg des Elektrodenschaftes derart angeordnet ist, daß er bei aufgesetzter Elektrodenkappe betätigbar ist.

11. Vorrichtung nach Anspruch 4, wobei zusätzlich zu der Wechselstation ein Magazin für Elektrodenkappe vorgesehen ist, in dem diese mit ihrer Öffnung frei zugänglich gespeichert sind, dadurch gekennzeichnet, daß das Magazin (30) in Verfahrrichtung des Elektrodenschaftes hinter der Kontrolleinrichtung (20) angeordnet ist.

12. Vorrichtung nach Anspruch 11, dadurch gekennzeichnet, daß das Magazin (30) mit einer Vereinzelungseinrichtung (31) für die Elektrodenkappen ausgerüstet ist.

13. Vorrichtung nach Anspruch 12, dadurch gekennzeichnet, daß die Vereinzelungseinrichtung (31) aus zwei von einem Kraftspeicher (34) auseinanderdrückbaren Backen (32, 33) besteht, die über einen Stellmotor (37) gegen einen ortsfesten Anschlag (38) verschiebbar sind.

14. Vorrichtung nach Anspruch 12 oder 13, dadurch gekennzeichnet, daß die Vereinzelungseinrichtung (31) in ihrer Ruhestellung aus dem Magazin (30) nachfüllbar ist.

15. Vorrichtung nach einem der Ansprüche 12 bis 14, dadurch gekennzeichnet, daß bei Betätigung des Stellmotors (37) eine der Backen (31) den Zulauf aus dem Magazin (30) verschließt.

**Claims**

1. A method of automatically changing electrode caps on welding-electrode shanks secured to loom drivers or electrode holders in welding robots, the electrode cap for changing being firmly clamped and rotated and, after the electrode cap has been pulled off, the welding-electrode shank is moved to an electrode cap store where it is inserted into an electrode cap and then hammers it firm, characterised in that, in order to pull of the electrode cap, the welding-electrode shank is preventing from twisting while being rotated by the welding robot, and the welding-electrode shank of electrode cap is simultaneously pulled back.

2. A method of automatically changing according to claim 1, characterised in that, after the cap has been pulled off, the welding-electrode shank is checked to see that the operation has been performed properly.

3. A method according to claim 1 or 2, characterised in that the welding-electrode shank is again checked after the cap has been taken up.

4. Apparatus for working the method, in which a releasably secured electrode cap is pulled off a welding-electrode shank in a changing station, the apparatus substantially comprising a rotatably mounted clamping device (4) actuated by an actuator (5) for clamping and rotating the electrode cap around its longitudinal axis, the clamping device (4) comprising a take-up part (12) rotatably mounted around its longitudinal axis and connected to the actuator (5) and having a central take-up bore (13), and also comprising a likewise rotatably mounted tension part (10), characterised in that the lever (16) is rotatably secured eccentrically to the take-up part (12) and its free end is rotatably mounted on a connecting rod (7) pivotably connected to the actuator (5), the pivot between the receiving part (12) and the lever (16) is spring-loaded (spring pair 17), and the tension part comprises a sickle-shaped arm (10) which on the one hand is eccentrically mounted on the take-up part (12) so that, when pivoted, it closes a part of the take-up bore (13), and on the other hand the arm is mounted on the connecting rod at a distance from the pivot (9) of the lever (16).

5. Apparatus according to claim 4, characterised in that the actuator (5) and the clamping device (4) are secured to a column (2) pivotable in the axial direction of the take-up bore (13), and the column can be pivoted by an additional actuator (2.2).

6. Apparatus according to claim 4 or 5, characterised in that the take-up part (12) is radially slotted around part of its periphery and the arm (10) is disposed in the slot.

7. Apparatus according to any of claims 4 to 6, characterised in that the inner wall (13) of the bore in the take-up part (12) is toothed.

8. Apparatus according to any of claims 4 to 7, characterised in that the arm (10) is toothed at the level of its portion cooperating with the bore (13).

9. Apparatus according to claim 4, characterised in that a monitoring device (20) is disposed in spatial relation with the take-up part (12).

10. Apparatus according to claim 9, characterised in that the monitoring device (20) comprises at least one limit switch (21 or 22) which is disposed in the path of the electrode shank so as to be actuated when the electrode cap is mounted.

11. Apparatus according to claim 4, in which a store for electrode cap is provided in addition to the changing station, the caps being stored in the store so that their opening is freely accessible, characterised in that the store (30) is disposed in the direction of travel of the electrode shank and behind the monitoring device (20).

12. Apparatus according to claim 11, characterised in that the store (30) is equipped with a device (31) for separating the electrode caps.

13. Apparatus according to claim 12, characterised in that the separating device (31) comprises two jaws (32, 33) for moving apart by a power accumulator (34) and movable by an actuator (37) against a stationary abutment (38).

14. Apparatus according to claim 12 or 13, characterised in that the separating device (31), when in its inoperative position, can be refilled from the store (30).

15. Apparatus according to any of claims 12 to 14, characterised in that when the actuator (37) is actuated, one of the jaws (31) closes the outlet from the store (30).

**Revendications**

1. Procédé de remplacement automatique des capuchons d'électrode sur des corps d'éléctrode de soudage qui sont fixés sur des dispositifs de prise ou des pinces de soudage de robots de soudage, les capuchons d'électrode étant serrés et tournés pour le remplacement, puis après extrait du capuchon d'électrode, le corps de l'électrode est conduit à un magasin à capuchons d'électrode pour s'introduire dans un capuchon d'électrode qui est alors battu pour se fixer, procédé caractérisé en ce qu'on bloque en rotation le corps de l'électrode de soudage pour extraire le capuchon de l'électrode pendant que le robot de soudage fait tourner l'électrode et en ce qu'on retire simultanément le corps de l'électrode ou le capuchon de l'électrode.

2. Procédé de remplacement automatique selon la revendication 1, caractérisé en ce que le corps de l'électrode de soudage est contrôlé quant à la réussite de l'extraction après l'extraction du capuchon.

3. Procédé selon la revendication 1 ou 2, caractérisé en ce que le corps de l'électrode de soudage est contrôlé une nouvelle fois après la mise en place du capuchon.

4. Dispositif pour la mise en oeuvre du procédé, un poste de changement assurant l'extraction d'un capuchon d'électrode fixé de manière amovible par rapport au corps d'une électrode de soudage, poste comprenant principalement une installation de pincement (4) montée à rotation, actionnée par un moteur de positionnement (5) pour serrer et pincer le capuchon de l'électrode selon son axe longitudinal, l'installation de serrage (4) se composant d'une pièce de réception (12) montée à rotation autour de son axe longitudinal et reliée au moteur de réglage (13), cette pièce ayant un perçage central (13) de réception ainsi qu'une pièce de serrage (10) montée également à rotation, dispositif caractérisé en ce qu'un levier (16) est fixé à rotation de manière excentrée sur la pièce de réception (12), levier dont l'extrémité libre est montée à rotation sur une tringle de liaison (7) reliée de manière pivotante au moteur de positionnement (5), le point d'articulation de la pièce de réception (12) et du levier (16) étant chargé par ressorts (paire de ressorts 17), la pièce de serrage comprenant un bras (10) en forme de faucille qui est monté d'une part de manière excentrée sur la pièce de réception (12) pour qu'à son basculement, il ferme une partie du perçage de réception (13) et d'autre part à une certaine distance du point d'articulation (9) du levier (16) sur la tringle de liaison.

5. Dispositif selon la revendication 4, caractérisé en ce que le moteur de positionnement (5) est fixé avec l'installation de serrage (4) sur une colonne (2) pivotant dans la direction axiale du perçage de réception (13), la colonne pouvant être basculée par un autre moteur de positionnement (2.2).

6. Dispositif selon la revendication 4 ou 5, caractérisé en ce que la pièce de réception (12) est fendue sur une partie de sa périphérie et le bras (10) est logé dans cette fente.

7. Dispositif selon l'une des revendications 4 à 6, caractérisé en ce que la paroi intérieure (13) du perçage de la pièce de réception (12) est dentée.

8. Dispositif selon l'une des revendications 4 à 7, caractérisé en ce que le bras (10) est denté à la hauteur de son segment coopérant avec le perçage (13).

9. Dispositif selon la revendication 4, caractérisé par une installation de contrôle (20) prévue en association géométrique avec la pièce de réception (12).

10. Dispositif selon la revendication 9, caractérisé en ce que l'installation de contrôle (20) se compose d'au moins un commutateur de fin de course (21, 22) qui est monté dans la trajectoire du corps de l'électrode pour être actionné lorsque le capuchon d'électrode est mis en place.

11. Dispositif selon la revendication 4, comportant en plus du poste de changement, un magasin pour les capuchons d'électrode dans lequel sont logés ces capuchons avec leur ouverture accessible librement, dispositif caractérisé en ce que le magasin (30) se trouve derrière l'installation de contrôle (20) dans la direction de déplacement du corps de l'électrode.

12. Dispositif selon la revendication 11, caractérisé en ce que le magasin (30) est équipé d'un dispositif de séparation (31) des capuchons d'électrode.

13. Dispositif selon la revendication 12, caractérisé en ce que l'installation de séparation (31) se compose de deux mâchoires (32, 33) pressées l'une contre l'autre par un accumulateur de force (34), mâchoires qui peuvent être déplacées contre une butée fixe (38) par un moteur de positionnement (37).

14. Dispositif selon la revendication 12 ou 13, caractérisé en ce que l'installation de séparation (31) peut être rechargée à partir du magasin (30) lorsqu'elle est en position de repos.

15. Dispositif selon l'une des revendications 12 à 14, caractérisé en ce que l'une des mâchoires (31) ferme l'accès au magasin (30) lorsque l'on actionne le moteur de positionnement (37).

Fig. 1

Fig. 2

EP 0 200 162 B1